# FASCICULE DE BREVET EUROPEEN

(11) **EP 4 493 811 B1**
(45) Date de publication et mention de la délivrance du brevet: **18.02.2026**
(21) Numéro de dépôt: 23713711.2
(22) Date de dépôt: 08.03.2023
(51) Int. Cl.: F02K 1/04

(54) **ASSEMBLAGE D'UN CÔNE D'ÉJECTION DANS UNE TUYÈRE DE TURBOMACHINE**
ANORDNUNG FÜR EINEN ABGASKONUS IN EINER TURBOMASCHINENDÜSE
ASSEMBLY FOR AN EXHAUST CONE IN A TURBOMACHINE NOZZLE

(30) Priorité: 14.03.2022 FR 2202232
(43) Date de publication de la demande: 22.01.2025
(73) Titulaire: Safran Ceramics, 33185 Le Haillan (FR)
(72) Inventeur: AUPETIT, Christophe, Paul, 77550 Moissy-Cramayel (FR); TESSON, Thierry, Guy, Xavier, 77550 Moissy-Cramayel (FR); AVENEL, Philippe, 77550 Moissy-Cramayel (FR)
(74) Mandataire: Ernest Gutmann - Yves Plasseraud S.A.S.
(86) Numéro de dépôt international: PCT/FR2023/050309
(87) Numéro de publication internationale: WO 2023/175257

(56) Documents cités:
- FR-A1- 2 935 753
- FR-A1- 3 100 575
- US-A1- 2012 160 933
- US-A1- 2015 226 083

## Description

### Domaine technique de l'invention

Le présent document concerne l'agencement d'un cône d'éjection dans une tuyère de turbomachine, en particulier l'agencement d'un cône d'éjection en composite à matrice céramique (CMC).

### Etat de la technique antérieure

Le présent exposé concerne un ensemble situé à l'arrière, au niveau d'une extrémité aval, d'un turboréacteur d'aéronef pour optimiser l'écoulement d'air expulsé par le turboréacteur. Plus précisément, le présent exposé concerne la liaison entre ce qui est souvent dénommé cône d'éjection et, situé juste à l'amont du cône d'éjection, un carter du turboréacteur, par exemple un carter de sortie de gaz du turboréacteur.

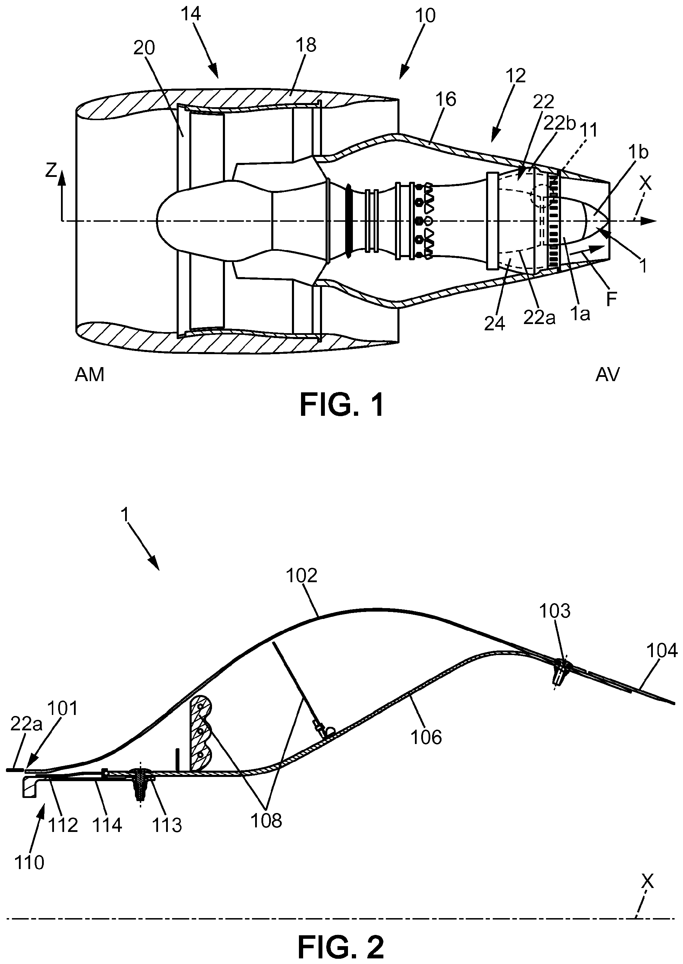

La figure 1 représente un ensemble pour turboréacteur d'aéronef, comprenant un élément central d'éjection de gaz, annulaire autour d'un axe longitudinal X et adapté pour que du gaz soit éjecté par le turboréacteur autour de lui, d'amont (AM) vers l'aval (AV), ledit ensemble étant relié à une sortie métallique d'un turboréacteur. L'axe longitudinal X précité est l'axe longitudinal, ou axe de rotation, de la turbomachine, en particulier de la soufflante 20 et des aubes mobiles du moteur 12. L'élément central d'éjection de gaz peut correspondre au cône d'éjection, repéré 1 ci-après, ou au moins à la partie amont 1a ci-après.

Le turboréacteur à gaz d'aéronef 10 comprend une partie centrale, formant le moteur 12 à turbine à gaz, montée à l'intérieur d'un ensemble 14 de nacelle de moteur, comme cela est typique d'un aéronef conçu pour un fonctionnement subsonique. Le turboréacteur peut notamment être un turboréacteur à double flux. L'ensemble 14 de nacelle comprend généralement une nacelle de moteur 16 et une nacelle de soufflante 18 entourant une soufflante 20 située axialement en amont du moteur 12.

Le moteur 12 comprend, axialement en partie aval, au moins une turbine qui peut être une turbine basse pression et, en aval de cette turbine, un carter d'échappement 22 métallique et comprenant une virole annulaire interne 22a et une virole annulaire externe 22b délimitant entre elles une partie aval de la veine annulaire primaire 24 dans laquelle circulent les gaz de combustion issus de la chambre de combustion du moteur 12.

La virole annulaire interne 22a est reliée, à son extrémité aval, au cône d'éjection 1, lequel peut comprendre une partie amont 1a, de forme sensiblement cylindrique, et une partie aval 1b de forme conique. La virole annulaire interne 22a est alignée avec la paroi externe du cône d'éjection 1 pour former une veine d'écoulement homogène de l'air en sortie du moteur 12.

Les documents US 2012/160933, FR 3100575 et US 2015/226083 décrivent des exemples de turbomachines comprenant des cônes d'éjection en composite à matrice céramique.

La paroi externe du cône d'éjection est généralement réalisée en composite à matrice céramique pour résister aux températures des gaz en sortie du moteur 12 et réduire la masse globale du turboréacteur.

Cependant, il reste difficile de réaliser une jonction aérodynamique efficiente entre la sortie métallique précitée du turboréacteur, qui peut être ladite virole annulaire interne 22a, et ledit élément central, qui peut être ladite partie amont 1a du cône d'éjection 1. En effet, la différence de matériaux entre le carter d'échappement 22 et le cône d'éjection 1 engendre des dilatations différentielles de la paroi externe du cône d'éjection 1 par rapport à la virole annulaire interne 22a. En fonctionnement, la paroi externe du cône d'éjection 1 et la virole annulaire interne 22a peuvent s'ovaliser, générant un ressaut entre la paroi externe du cône d'éjection 1 et la virole annulaire interne 22a. En conséquence, les gaz chauds provenant de la veine annulaire primaire 24, coté moteur 12, s'engouffrent à l'intérieur du cône d'éjection, au lieu de suivre la veine annulaire primaire 24 à l'extérieur de la paroi externe. Ce phénomène, dit écopage, est néfaste pour la tenue des pièces, en particulier du cône d'éjection, car il génère des efforts supplémentaires et réduit les performances du moteur 12 en perturbant l'écoulement du flux d'air.

Il existe un besoin d'amélioration de l'assemblage du cône d'éjection et du carter d'échappement.

### Résumé de l'invention

Le présent document propose un ensemble pour turbomachine d'axe longitudinal comprenant :
- un cône d'éjection comprenant une paroi annulaire externe d'écoulement d'un flux d'air primaire réalisée dans un matériau composite à matrice céramique et une paroi annulaire interne agencée à l'intérieur de la paroi annulaire externe,
- un carter métallique agencé en amont du cône d'éjection et comprenant une virole définissant une face radialement interne du flux d'air primaire,
- une bride de liaison métallique intercalée longitudinalement entre la paroi annulaire interne et le carter métallique et reliant la paroi annulaire interne audit carter métallique,

dans lequel une extrémité amont de la paroi annulaire externe est agencée dans le prolongement aérodynamique de la virole du carter d'échappement, et
dans lequel la paroi annulaire externe est agencée avec un jeu annulaire radial avec une partie annulaire de la bride de liaison,
l'ensemble comprenant en outre au moins une vis traversant la paroi annulaire externe et la partie annulaire de la bride de liaison, et un écrou vissé sur ladite vis et agencé radialement à l'intérieur de la partie annulaire de la bride de liaison,
l'ensemble comprenant en outre au moins une entretoise maintenue radialement entre l'écrou et une surface radialement interne de la partie annulaire de la bride de liaison, ladite entretoise présentant un coefficient de dilatation supérieur au coefficient de dilatation du carter métallique.

En fonctionnement, lorsque l'ensemble est à chaud, le carter métallique, en particulier la virole du carter métallique, et la bride de liaison présentent des dilatations radiales supérieures aux dilatations radiales de la paroi annulaire externe. Le coefficient de dilatation de l'entretoise permet de compenser radialement les différences de dilatation thermique entre les pièces métalliques et la paroi annulaire externe en CMC, ce qui assure le maintien en contact entre le dessous de la vis et la paroi annulaire externe. Cet agencement permet d'empêcher le phénomène d'écopage car la paroi annulaire externe est maintenue dans le prolongement aérodynamique de la virole du carter d'échappement. L'entretoise permet ainsi de compenser le différentiel de dilatation thermique et d'assurer la continuité de la rigidité de l'ensemble.

Le coefficient de dilatation de l'entretoise peut être 20% à 30% supérieur au coefficient de dilatation du carter métallique.

Plusieurs vis peuvent être agencées pour fixer la paroi annulaire externe à la bride de liaison. Elles peuvent de préférence être réparties de façon circonférentielle sur la bride de liaison. Par exemple, au moins quatre vis peuvent fixer la paroi annulaire externe à la bride de liaison. Les vis peuvent être agencées au niveau d'une partie d'extrémité amont de la paroi annulaire externe. Par exemple, la paroi annulaire externe peut être réalisée en alliage à base de nickel du type Inconel^{®} 625 et l'entretoise peut être réalisée en acier du type A286.

Selon un mode de réalisation, l'ensemble peut comprendre une entretoise pour chaque vis. Chaque entretoise peut entourer la vis correspondante. L'entretoise peut être solidaire de l'écrou vissé sur ladite vis. Alternativement, l'entretoise peut être une pièce distincte de l'écrou, ce dernier étant serré contre une extrémité radialement interne de ladite entretoise. Dans ce cas, l'entretoise peut être réalisée dans un matériau différent du matériau de l'écrou.

L'entretoise peut être cylindrique, en particulier tubulaire. L'entretoise peut présenter une forme conique creuse pour recevoir la vis, la plus grande base de l'entretoise étant en butée contre la surface radialement interne de la partie annulaire de la bride de liaison. L'entretoise peut être réalisée en acier, en particulier de type A286, ou tout autre alliage à base de fer.

Selon un mode de réalisation, l'entretoise peut présenter une forme ondulée ou sinusoïdale. L'entretoise peut comprendre au moins une première partie en contact avec la surface radialement interne de la partie annulaire de la bride de liaison et au moins une seconde partie traversée par la vis, radialement distante de la partie annulaire de la bride de liaison et reliée à ladite au moins une première partie. L'écrou peut être serré contre une surface radialement interne de ladite au moins une seconde partie, ladite première partie étant distante circonférentiellement de la vis. L'entretoise peut être réalisée en acier, en particulier de type A286, ou tout autre alliage à base de fer. Par exemple, un espace peut être prévu entre la surface externe de la vis et la surface interne du creux de l'entretoise, lorsque l'ensemble est à froid. Pour cela, la vis peut comprendre des évidements sur sa surface externe.

En particulier, l'ensemble peut comprendre, pour chaque vis, un écrou supplémentaire monté sur ladite vis et serré contre une surface radialement externe de ladite au moins une seconde partie. Cet agencement permet d'éviter la déformation de la paroi annulaire externe radialement vers l'intérieur en direction de la bride de liaison.

L'entretoise peut être annulaire, c'est-à-dire s'étendre sur toute la circonférence de la partie annulaire de la bride de liaison. L'entretoise peut être monobloc ou formée par plusieurs secteurs annulaires. Alternativement, l'entretoise peut s'étendre sur un secteur annulaire, par exemple sur un huitième ou un quart de cercle. L'entretoise peut comprendre plusieurs secondes parties recevant chacune une vis. L'entretoise peut alors comprendre une première partie agencée entre chaque paire de secondes parties consécutives.

Selon un mode de réalisation, la paroi annulaire externe peut être formée par au moins deux secteurs annulaires adjacents, ledit ensemble comprenant au moins une paroi de liaison de deux secteurs annulaires adjacents. Ladite paroi de liaison peut être intercalée radialement entre la paroi annulaire externe et la bride de liaison. La paroi de liaison peut être annulaire ou s'étendre sur un secteur angulaire, par exemple un huitième de cercle. La paroi de liaison peut être réalisée en composite à matrice céramique. La paroi de liaison permet de rigidifier la paroi annulaire externe.

La paroi de liaison peut être fixée à la paroi annulaire externe par la vis fixant la paroi annulaire externe à la bride de liaison. Un écrou de liaison peut être vissé sur ladite vis et serré contre une surface radialement interne de la paroi de liaison. L'écrou peut être couplé à une entretoise supplémentaire traversée par la vis et intercalée radialement entre la paroi de liaison et ledit écrou de liaison. L'entretoise supplémentaire peut être cylindrique ou présenter une forme conique creuse pour recevoir la vis, la plus grande base de l'entretoise étant en butée contre la surface radialement interne de la paroi de liaison. L'entretoise supplémentaire peut être réalisée en acier, en particulier de type A286, ou tout autre alliage à base de fer. Dans ce cas, la partie annulaire de la bride de liaison peut présenter des orifices configurés pour recevoir chacun à la fois la vis et l'entretoise supplémentaire. L'extrémité amont de la paroi annulaire externe peut être alignée longitudinalement avec l'extrémité amont de la partie annulaire de la bride de liaison.

La paroi annulaire externe peut comprendre au moins un orifice recevant une des vis, ledit orifice présentant un diamètre supérieur au diamètre de ladite vis.

Ladite au moins une vis peut comprendre une tête agencée en simple contact avec la surface radialement externe de la paroi annulaire externe lorsque l'ensemble est à froid.

La paroi annulaire interne peut être en CMC ou métallique. Les vis peuvent être métalliques, par exemple réalisées dans le même matériau que la bride de liaison et/ou la virole du carter métallique.

L'ensemble peut être considéré à froid lorsqu'il est à une température inférieure à 100 °C et peut être considéré à chaud lorsqu'il est à une température supérieure à 500 °C, par exemple comprise entre 500 °C et 700 °C.

Le présent document concerne aussi une turbomachine ou un turboréacteur, par exemple d'un aéronef, comprenant un ensemble tel que précité.

### Brève description des figures

[Fig. 1] représente une vue en coupe radiale d'une turbomachine selon l'art antérieur.
[Fig. 2] représente une vue en coupe radiale d'un agrandissement de la zone de liaison du cône d'éjection de la turbomachine de la figure 1 au carter d'échappement.
[Fig. 3] représente une vue en coupe radiale agrandie de l'assemblage du cône d'éjection de la turbomachine de la figure 1 au carter d'échappement, au cours du fonctionnement de la turbomachine.
[Fig. 4] représente une vue en coupe radiale de l'assemblage du cône d'éjection selon un premier mode de réalisation du présent document lorsque la turbomachine est à froid.
[Fig. 5] représente une vue en coupe radiale de l'assemblage du cône d'éjection selon le premier mode de réalisation de la figure 4 lorsque la turbomachine est à chaud dans une première configuration de fonctionnement.
[Fig. 6] représente une vue en coupe radiale de l'assemblage du cône d'éjection selon le premier mode de réalisation de la figure 4 lorsque la turbomachine est à chaud dans une seconde configuration de fonctionnement.
[Fig. 7] la figure 7a représente une vue en coupe radiale de l'assemblage du cône d'éjection selon un second mode de réalisation du présent document lorsque la turbomachine est à froid, et la figure 7b représente une vue en coupe transversale dudit assemblage selon le second mode de réalisation.
[Fig. 8] la figure 8a représente une vue en coupe radiale de l'assemblage du cône d'éjection selon un troisième mode de réalisation du présent document lorsque la turbomachine est à froid, et la figure 8b représente une vue en coupe transversale dudit assemblage selon le troisième mode de réalisation.

### Description détaillée de l'invention

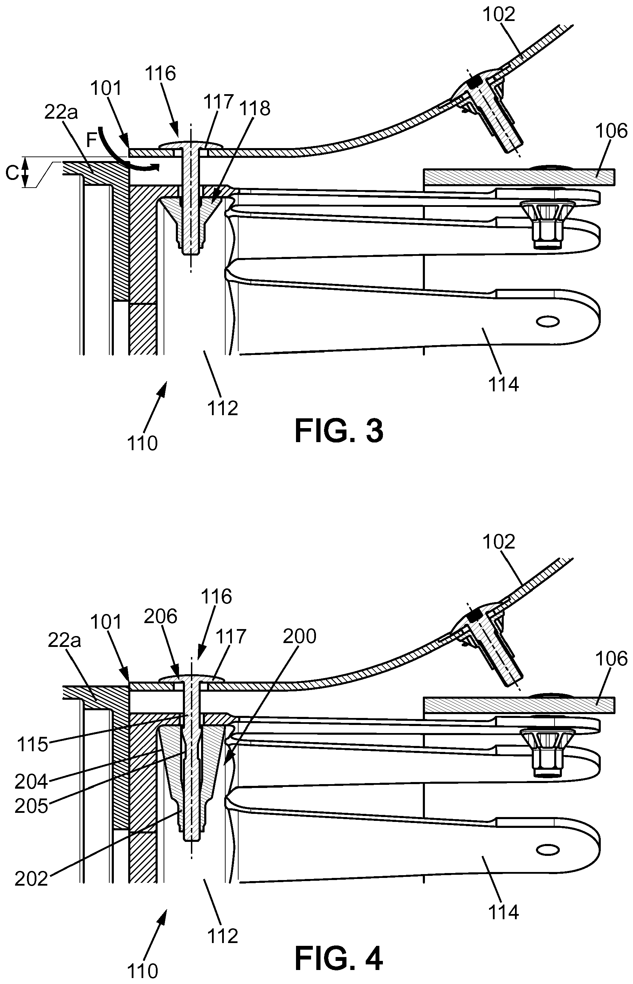

La figure 2 représente un agrandissement de la zone 11 de la figure 1 et la figure 3 est une vue tronquée de cet agrandissement lorsque les pièces de la turbomachine sont à chaud. L'ensemble est considéré à froid lorsqu'il est à une température inférieure à 100 °C et peut être considéré à chaud lorsqu'il est à une température supérieure à 500 °C, par exemple comprise entre 500 °C et 700 °C.

Le cône d'éjection 1 comprend une paroi annulaire externe 102 autour de l'axe longitudinal X et agencée en amont, et une paroi conique 104 agencée en aval suivant le flux de gaz chauds F. La paroi annulaire externe 102 entoure une paroi annulaire interne 106 laquelle est fixée à l'aval à la paroi annulaire externe 102, par des vis de fixation 103. Des cloisons 108 sont agencées dans l'espace entre la paroi annulaire externe 102 et la paroi annulaire interne 106 de sorte à former une pluralité de caissons acoustiques. Les cloisons 108 s'étendent perpendiculairement à la paroi annulaire interne 106. La paroi annulaire interne 106 est en outre fixée à l'amont à la virole 22a du carter d'échappement 22 par l'intermédiaire d'une bride de liaison 110. La bride de liaison 110 comprend une partie annulaire 112 à l'amont et une pluralité de pattes de fixation 114 s'étendant longitudinalement vers l'aval depuis la partie annulaire 112. Les pattes de fixation 114 peuvent être flexibles. Chaque patte de fixation 114 est fixée par boulonnage 113 à la paroi annulaire interne 106. L'extrémité amont 101 de la paroi annulaire externe 102 est dans la continuité de la virole 22a du carter d'échappement afin de délimiter la veine 24 d'écoulement des gaz chauds en sortie du moteur 12 de la turbomachine.

La paroi annulaire externe 102 est réalisée dans un matériau composite à matrice céramique (CMC), pour résister aux hautes températures des gaz chauds tout en réduisant la masse globale de la turbomachine. La paroi annulaire interne 106 peut être métallique ou en CMC. La virole 22a du carter d'échappement 22 et la bride de liaison 110 sont généralement métalliques.

Pour éviter le débattement radialement vers l'extérieur de la paroi annulaire externe 102, une partie amont de la paroi annulaire externe 102 est fixée par vis 116 et écrou 118 à la partie annulaire 112 de la bride de liaison 110. La tête 117 de la vis repose contre la surface radialement externe de la paroi annulaire externe 102. L'écrou 118 est serré contre la surface radialement interne de la partie annulaire 112 de la bride de liaison 110. La vis et l'écrou sont généralement métalliques.

Comme montré à la figure 3, en fonctionnement de la turbomachine, les pièces du cône d'éjection 1 sont soumises aux hautes températures des gaz chauds en sortie du moteur 12. Ceci engendre une dilatation des pièces métalliques, soit de la virole 22a du carter d'échappement 22 et de la bride de liaison 110, plus importante que la dilatation de la paroi annulaire externe 102, créant un décalage radial, formant un espace C, entre l'extrémité 101 et la virole 22a. Une partie du flux de gaz chauds F peut s'introduire à travers l'espace C à l'intérieur de la paroi annulaire externe 102 et de la paroi annulaire interne 106. Ceci peut endommager les pièces du cône d'éjection.

Pour limiter voire supprimer ce phénomène, selon l'invention, au moins une entretoise 200 est prévue pour compenser le différentiel de dilatation entre les pièces métalliques et la paroi annulaire externe 102 en CMC (voir les figures 4 à 6). L'entretoise 200 comprend une partie filetée 202 vissée sur une tige 115 de la vis 116 et une partie conique 204 traversée par la tige 115 de la vis 116. La partie conique 204 est agencée entre la partie filetée 202 et la partie annulaire 112 de la bride de liaison 110. Dans ce mode de réalisation, la partie filetée 202, formant un écrou, est solidaire de la partie conique 204. Alternativement, la partie filetée 202 peut être séparée de la partie conique 204, et montée serrée sur la tige 115 en butée contre la partie conique 204. Dans ce cas, la partie filetée 202 peut être réalisée dans un matériau différent de la partie conique 204. Au lieu de la partie conique 204, l'entretoise 200 peut présenter une partie cylindrique, en particulier tubulaire.

Un évidement 205 est prévu au niveau de la tige 115 ménageant un espace entre la surface interne du creux de la partie conique 202 et la surface externe de la tige 115. Cet espace permet la dilatation de l'entretoise 200.

L'entretoise 200 présente un coefficient de dilatation supérieur, par exemple au moins 20% à 30% supérieur, au coefficient de dilatation de la virole 22a du carter d'échappement 22. Ceci permet de compenser les différences de dilatation thermique B lorsque l'ensemble est à chaud.

L'entretoise 200 peut être réalisée en acier, en particulier de type A286. Son coefficient de dilatation est alors de 17,7 x 10⁻⁶ K⁻¹ à 500 °C. Le cône d'éjection 1 peut quant à lui être réalisé en un alliage comprenant majoritairement du nickel et du chrome. Il est par exemple réalisé en Inconel^{®} 625, dont le coefficient de dilatation est de 13,9 x 10⁻⁶ K⁻¹ à 500 °C.

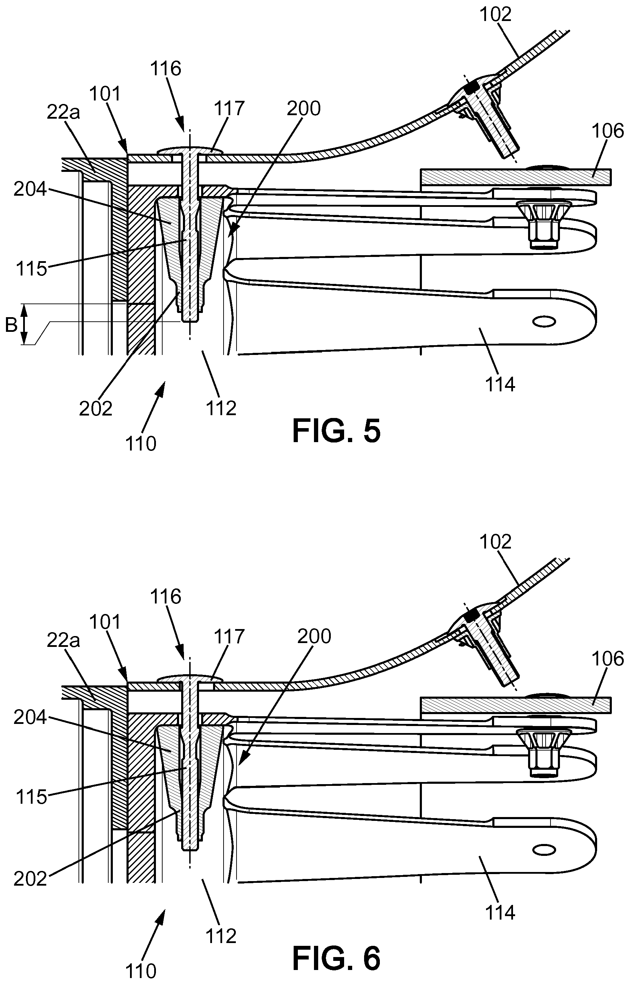

En outre, la paroi annulaire externe 102 comprend des orifices 206 recevant chacun la tige 115 de la vis 116. L'orifice 206 présente un diamètre supérieur au diamètre de la tige 115. Ceci permet le déplacement axial de la vis 116 par rapport à la paroi annulaire externe 102 lorsque la bride de liaison 110 et le carter d'échappement 22 se dilatent plus que la paroi annulaire externe 102 suivant l'axe longitudinal X, tel que représenté sur la figure 6.

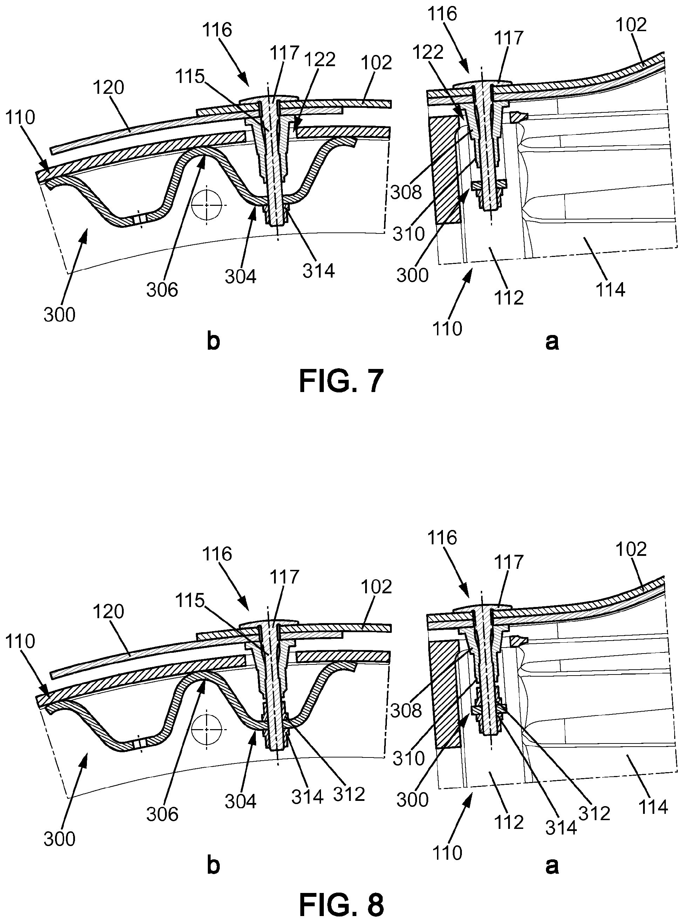

Les figures 7a et 7b montrent un second mode de réalisation du cône d'éjection. A la différence du cône d'éjection des figures 4 à 6, une entretoise 300 de forme ondulée et s'étendant circonférentiellement est agencée contre la surface radialement interne de la partie annulaire 112 de la bride de liaison 110.

L'entretoise 300 comprend des premières parties 306 en contact avec la surface radialement interne de la partie annulaire 112 de la bride de liaison 110. L'entretoise 300 comprend des secondes parties 304 traversées par les vis 116 et chacune agencée entre deux premières parties 306 successives. Les secondes parties 304 sont radialement distantes des premières parties 306. Un écrou 314 est vissé sur la tige 115 et est serré contre la surface radialement interne de la seconde partie 304.

De la même façon que l'entretoise 200, l'entretoise 300 présente un coefficient de dilatation supérieur, en particulier au moins 20% à 30% supérieur, au coefficient de dilatation de la virole 22a du carter d'échappement 22. Ceci permet de compenser les différences de dilatation thermique lorsque l'ensemble est à chaud.

L'entretoise 300 peut être réalisée en acier, en particulier de type A286.

La paroi annulaire externe 102 est formée par plusieurs secteurs annulaires adjacents reliés entre eux par une paroi de liaison 120, par exemple réalisée en CMC.

La paroi de liaison 120 est intercalée radialement entre la paroi annulaire externe 102 et la bride de liaison 110 et est fixée à la paroi annulaire externe 102. La paroi de liaison 120 peut être annulaire ou s'étendre sur un secteur angulaire, par exemple un huitième de cercle, en se chevauchant sur deux secteurs annulaires successifs de la paroi annulaire externe 102. La paroi de liaison 120 est fixée à la paroi annulaire externe 102 par la vis 116. Un écrou de liaison 310 est vissé sur la tige 115 de la vis 116 et est serré contre une surface radialement interne de la paroi de liaison 120. L'écrou de liaison 310 est solidaire d'une entretoise supplémentaire 308 traversée par la tige 115 et intercalée radialement entre la paroi de liaison 120 et l'écrou de liaison 310. L'entretoise supplémentaire 308 est conique mais peut être cylindrique, par exemple tubulaire. L'entretoise supplémentaire 308 peut être réalisée dans le même matériau que l'entretoise 300 ou dans tout autre matériau adapté. La partie annulaire 112 de la bride de liaison 110 présente des orifices 122 présentant un diamètre supérieur au diamètre de l'entretoise supplémentaire 308 et de l'écrou 310.

La figure 7b montre un seul premier secteur angulaire de la paroi annulaire externe 102 sur la partie gauche de l'image. Bien entendu, en présence du second secteur angulaire de la paroi annulaire externe 102, une autre vis 116 pourra être insérée dans la paroi annulaire externe 102, la paroi de liaison 120 et la seconde partie 304 de l'entretoise 300.

Afin de limiter les débattements de la paroi annulaire externe 102 radialement vers l'intérieur, un écrou supplémentaire 312 est vissé sur la tige 115 et serré contre la surface radialement externe de la seconde partie 304, tel que représenté sur les figures 8a et 8b. Ainsi, l'écrou supplémentaire 312 est agencé en opposition à l'écrou 314.

## Revendications

1. Ensemble pour turbomachine d'axe longitudinal (X) comprenant :
- un cône d'éjection (1) comprenant une paroi annulaire externe (102) d'écoulement d'un flux d'air primaire (F) réalisée dans un matériau composite à matrice céramique et une paroi annulaire interne (106) agencée à l'intérieur de la paroi annulaire externe,
- un carter métallique (22) agencé en amont du cône d'éjection et comprenant une virole (22a) définissant une face radialement interne du flux d'air primaire,
- une bride de liaison (110) métallique intercalée longitudinalement entre la paroi annulaire interne (106) et le carter métallique (22) et reliant la paroi annulaire interne audit carter métallique,
dans lequel une extrémité amont (101) de la paroi annulaire externe est agencée dans le prolongement aérodynamique de la virole (22a) du carter d'échappement, et
dans lequel la paroi annulaire externe (102) est agencée avec un jeu annulaire radial avec une partie annulaire (112) de la bride de liaison (110),
**caractérisé en ce que** l'ensemble comprend en outre au moins une vis (116) traversant la paroi annulaire externe (102) et la partie annulaire (112) de la bride de liaison (110), et un écrou (202,314) vissé sur ladite vis et agencé radialement à l'intérieur de la partie annulaire de la bride de liaison, l'ensemble comprenant en outre au moins une entretoise (204,300) maintenue radialement entre l'écrou et une surface radialement interne de la partie annulaire de la bride de liaison, ladite entretoise (204,300) présentant un coefficient de dilatation supérieur au coefficient de dilatation du carter métallique (22).

2. Ensemble selon la revendication précédente, comprenant une entretoise (204) pour chaque vis (116), et dans lequel chaque entretoise entoure la vis correspondante et est solidaire de l'écrou (202) vissé sur ladite vis.

3. Ensemble selon la revendication 1, dans lequel l'entretoise (300) présente une forme ondulée et comprend au moins une première partie (306) en contact avec la surface radialement interne de la partie annulaire (112) de la bride de liaison (110) et au moins une seconde partie (304) traversée par la vis (116), radialement distante de la partie annulaire (112) de la bride de liaison (110) et reliée à ladite au moins une première partie (306), dans lequel l'écrou (314) est serré contre une surface radialement interne de ladite au moins une seconde partie (304), ladite première partie étant distante circonférentiellement de la vis.

4. Ensemble selon la revendication précédente, comprenant pour chaque vis (116) un écrou supplémentaire (312) monté sur ladite vis et serré contre une surface radialement externe de ladite au moins une seconde partie (304).

5. Ensemble selon la revendication 3 ou 4, dans lequel l'entretoise (300) est annulaire.

6. Ensemble selon l'une des revendications précédentes, dans lequel la paroi annulaire externe (102) est formée par au moins deux secteurs annulaires adjacents, ledit ensemble comprenant au moins une paroi de liaison (120) de deux secteurs annulaires adjacents, ladite paroi de liaison (120) étant intercalée radialement entre la paroi annulaire externe (102) et la bride de liaison (110).

7. Ensemble selon l'une des revendications précédentes, dans lequel l'extrémité amont (101) de la paroi annulaire externe (102) est alignée longitudinalement avec l'extrémité amont de la partie annulaire (112) de la bride de liaison (110).

8. Ensemble selon l'une des revendications précédentes, dans lequel la paroi annulaire externe (102) comprend au moins un orifice (206) recevant une des vis (116), ledit orifice présentant un diamètre supérieur au diamètre de ladite vis.

9. Ensemble selon l'une des revendications précédentes, dans lequel ladite au moins une vis (116) comprend une tête (117) agencée en simple contact avec la surface radialement externe de la paroi annulaire externe (102) lorsque l'ensemble est à froid.

10. Turbomachine comprenant un ensemble selon l'une des revendications précédentes.

## Patentansprüche

1. Anordnung für ein Turbotriebwerk mit Längsachse (X), umfassend:
- einen Ausstoßkonus (1) mit einer aus einem Verbundwerkstoff mit Keramikmatrix ausgebildeten äußeren Ringwand (102) für den Durchfluss eines Primärluftstroms (F) und einer inneren Ringwand (106), die innerhalb der äußeren Ringwand angeordnet ist,
- ein Metallgehäuse (22), das stromaufwärts des Ausstoßkonus angeordnet ist und einen Mantelring (22a) umfasst, der eine radial innenliegende Seite für den Primärluftstrom definiert,
- einen Verbindungsflansch (110) aus Metall, der in Längsrichtung zwischen der inneren Ringwand (106) und dem Metallgehäuse (22) eingefügt ist und die innere Ringwand mit dem Metallgehäuse verbindet,
wobei ein stromaufwärtiges Ende (101) der äußeren Ringwand in aerodynamischer Verlängerung des Mantelrings (22a) des Auslassgehäuses angeordnet ist, und
wobei die äußere Ringwand (102) mit einem radialen Ringspiel zu einem ringförmigen Abschnitt (112) des Verbindungsflansches (110) angeordnet ist,
**dadurch gekennzeichnet, dass**
die Anordnung ferner zumindest eine Schraube (116) umfasst, die die äußere Ringwand (102) und den ringförmigen Abschnitt (112) des Verbindungsflansches (110) durchdringt, sowie eine Mutter (202, 314), die auf die Schraube aufgeschraubt und radial innerhalb des ringförmigen Abschnitts des Verbindungsflansches angeordnet ist,
wobei die Anordnung ferner zumindest einen Abstandhalter (204, 300) umfasst, der radial zwischen der Mutter und einer radial inneren Fläche des ringförmigen Abschnitts des Verbindungsflansches gehalten wird, wobei der Abstandhalter (204, 300) einen Ausdehnungskoeffizienten aufweist, der größer ist als der Ausdehnungskoeffizient des Metallgehäuses (22).

2. Anordnung nach dem vorhergehenden Anspruch,
umfassend pro Schraube (116) einen Abstandhalter (204), wobei jeder Abstandhalter die entsprechende Schraube umgibt und fest mit der auf diese Schraube aufgeschraubten Mutter (202) verbunden ist.

3. Anordnung nach Anspruch 1,
wobei der Abstandhalter (300) eine gewellte Form aufweist und zumindest einen ersten Abschnitt (306) umfasst, der mit der radial inneren Fläche des ringförmigen Abschnitts (112) des Verbindungsflansches (110) in Kontakt steht, sowie zumindest einen zweiten Abschnitt (304), der von der Schraube (116) durchsetzt ist, radial von dem ringförmigen Abschnitt (112) des Verbindungsflansches (110) beabstandet ist und mit dem zumindest einen ersten Abschnitt (306) verbunden ist, wobei die Mutter (314) gegen eine radial innere Fläche des zumindest einen zweiten Abschnitts (304) angezogen ist, wobei der erste Abschnitt in Umfangsrichtung von der Schraube beabstandet ist.

4. Anordnung nach dem vorhergehenden Anspruch,
umfassend pro Schraube (116) eine weitere Mutter (312), die auf die Schraube aufgesetzt und gegen eine radial äußere Fläche des zumindest einen zweiten Abschnitts (304) angezogen ist.

5. Anordnung nach Anspruch 3 oder 4,
wobei der Abstandhalter (300) ringförmig ausgebildet ist.

6. Anordnung nach einem der vorhergehenden Ansprüche,
wobei die äußere Ringwand (102) aus zumindest zwei aneinandergrenzenden Ringsektoren gebildet ist, wobei die Anordnung zumindest eine Verbindungswand (120) zum Verbinden zweier aneinandergrenzender Ringsektoren umfasst, wobei die Verbindungswand (120) radial zwischen der äußeren Ringwand (102) und dem Verbindungsflansch (110) eingefügt ist.

7. Anordnung nach einem der vorhergehenden Ansprüche,
wobei das stromaufwärtige Ende (101) der äußeren Ringwand (102) in Längsrichtung mit dem stromaufwärtigen Ende des ringförmigen Abschnitts (112) des Verbindungsflansches (110) ausgerichtet ist.

8. Anordnung nach einem der vorhergehenden Ansprüche,
wobei die äußere Ringwand (102) zumindest eine Öffnung (206) aufweist, die eine der Schrauben (116) aufnimmt, wobei die Öffnung einen Durchmesser aufweist, der größer ist als der Durchmesser der Schraube.

9. Anordnung nach einem der vorhergehenden Ansprüche,
wobei die zumindest eine Schraube (116) einen Schraubenkopf (117) aufweist, der in einfachem Kontakt mit der radial äußeren Fläche der äußeren Ringwand (102) steht, wenn die Anordnung in kaltem Zustand vorliegt.

10. Turbotriebwerk mit einer Anordnung nach einem der vorhergehenden Ansprüche.

## Claims

1. Assembly for a turbomachine having a longitudinal axis (X), comprising:
- an exhaust cone (1) comprising an outer annular wall (102) for the flow of a primary air flow (F), made of a ceramic matrix composite material, and an inner annular wall (106) arranged inside the outer annular wall,
- a metal casing (22) arranged upstream of the exhaust cone and comprising a shroud (22a) defining a radially inner face with respect to the primary air flow,
- a metal connecting flange (110) interposed longitudinally between the inner annular wall (106) and the metal casing (22) and connecting the inner annular wall to said metal casing,
wherein an upstream end (101) of the outer annular wall is arranged in the aerodynamic extension of the shroud (22a) of the exhaust casing, and
wherein the outer annular wall (102) is arranged with a radial annular clearance with an annular portion (112) of the connecting flange (110),
**characterized in that** the assembly further comprises at least one bolt (116) which passes through the outer annular wall (102) and the annular portion (112) of the connecting flange (110), and a nut (202,314) screwed onto said bolt and arranged radially inside the annular portion of the connecting flange,
the assembly further comprising at least one spacer (204,300) held radially between the nut and a radially inner surface of the annular portion of the connecting flange, said spacer (204,300) having a coefficient of expansion that is greater than the coefficient of expansion of the metal casing (22).

2. Assembly according to the preceding claim, comprising a spacer (204) for each bolt (116), and wherein each spacer surrounds the corresponding bolt and is integral with the nut (202) screwed onto said bolt.

3. Assembly according to claim 1, wherein the spacer (300) has a corrugated shape and comprises at least a first portion (306) in contact with the radially inner surface of the annular portion (112) of the connecting flange (110) and at least a second portion (304) traversed by the bolt (116), which is radially distant from the annular portion (112) of the connecting flange (110) and is connected to said at least a first portion (306), wherein the nut (314) is tightened against a radially inner surface of said at least a second portion (304), said first portion being circumferentially distant from the bolt.

4. Assembly according to the preceding claim, comprising, for each bolt (116), an additional nut (312) mounted on said bolt and tightened against a radially outer surface of said at least a second portion (304).

5. Assembly according to claim 3 or 4, wherein the spacer (300) is annular.

6. Assembly according to one of the preceding claims, wherein the outer annular wall (102) is formed by at least two adjacent annular sectors, said assembly comprising at least one connecting wall (120) joining two adjacent annular sectors, said connecting wall (120) being interposed radially between the outer annular wall (102) and the connecting flange (110).

7. Assembly according to one of the preceding claims, wherein the upstream end (101) of the outer annular wall (102) is aligned longitudinally with the upstream end of the annular portion (112) of the connecting flange (110).

8. Assembly according to one of the preceding claims, wherein the outer annular wall (102) comprises at least one orifice (206) receiving one of the bolts (116), said orifice having a greater diameter than the diameter of said bolt.

9. Assembly according to one of the preceding claims, wherein said at least one bolt (116) comprises a head (117) arranged in simple contact with the radially outer surface of the outer annular wall (102) when the assembly is cold.

10. Turbomachine comprising an assembly according to one of the preceding claims.
